Europäisches Patentamt

European Patent Office

Office européen des brevets

(11) Veröffentlichungsnummer: **0 257 286 B1**

(12) **EUROPÄISCHE PATENTSCHRIFT**

(45) Veröffentlichungstag der Patentschrift: 08.07.92

(51) Int. Cl.⁵: **A01N 25/04**, A01N 25/30

(21) Anmeldenummer: 87110367.7

(22) Anmeldetag: 17.07.87

(54) Konzentrierte wässrige Mikroemulsionen.

(30) Priorität: 23.07.86 DE 3624910

(43) Veröffentlichungstag der Anmeldung:
02.03.88 Patentblatt 88/09

(45) Bekanntmachung des Hinweises auf die
Patenterteilung:
08.07.92 Patentblatt 92/28

(84) Benannte Vertragsstaaten:
AT BE CH DE FR GB GR IT LI NL SE

(56) Entgegenhaltungen:
EP-A- 0 088 049
EP-A- 0 160 182

(73) Patentinhaber: HOECHST AKTIENGESELL-
SCHAFT
Postfach 80 03 20
W-6230 Frankfurt am Main 80(DE)

(72) Erfinder: Röchling, Hans, Dr.
Geierfeld 25
W-6232 Bad Soden am Taunus(DE)
Erfinder: Albrecht, Konrad, Dr.
Sodener Strasse 64
W-6233 Kelkheim (Taunus)(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue konzentrierte wäßrige Mikroemulsionen zur Anwendung im Pflanzenschutz, die eine Kombination von phosphorylierten mit bestimmten nicht phosphorylierten Tensiden enthalten. Bei Anwendung dieser Kombination von Tensiden erhält man konzentrierte wäßrige Emulsionen in Form von transparenten Mikroemulsionen, die vorteilhafte anwendungstechnische Eigenschaften besitzen.

Mikroemulsionen besitzen Teilchengrößen, die im wesentlichen zwischen 3 bis 10 nm variieren. Die Zubereitungsform dieser wäßrigen Mikroemulsionen kann für Wirkstoffe verwandt werden, die bisher als emulgierbare Konzentrate mit einem hohem Lösungsmittelanteil formuliert wurden. Letztere Konzentrate besitzen im Gegensatz zu den genannten Mikroemulsionen höhere Anwendertoxizitäten. Infolge des geringeren Lösungsmittelgehaltes besitzen die neuen Mikroemulsionen einen höheren Flammpunkt. Sie sind daher gefahrloser zu handhaben.

Die Herstellung von Mikroemulsionen ist beschrieben in DE-OS 30 09 944, DE-OS 32 35 612, EP-A 01 07 023 und EP-A 01 60 182. Die in diesen Schriften beschriebenen Verfahren sind jedoch für die nachfolgend genannten Wirkstoffe nicht anwendbar; sie führen in diesen Fällen zu instabilen oder zu hochviskosen Formulierungen.

Es wurde nun überraschenderweise gefunden, daß durch die Verwendung einer Kombination von phosphorylierten mit ausgewählten nicht phosphorylierten Emulgatoren eine Vielzahl von Pflanzenschutz-Wirkstoffen zu transparenten stabilen Mikroemulsionen verarbeitet werden können.

Gegenstand der vorliegenden Erfindung sind daher Pflanzenschutzmittel auf der Basis von wäßrigen Mikroemulsionen, dadurch gekennzeichnet, daß sie als Emulgatoren ethoxylierte und phosphorylierte styrylsubstituierte Phenole, oder deren Salze (Emulgatortyp I) in Kombination mit einem oder mehreren nichtphosphorylierten Emulgatoren aus der Gruppe der $(C_{10}-C_{16})$Alkylmono- bis -hexaglykolethersulfatsalze, der $\alpha$-$(C_{14}-C_{19})$-Alkenolsulfat -Salze, der gegebenenfalls chlorierten $(C_{13}-C_{18})$alkansulfonsauren Salze, der dodecylphenylsulfonsauren Salze, der Aminoxethylate oder der $\alpha$-$(C_9-C_{20})$Alkyl-$\omega$-hydroxypolyoxethylene mit 2 bis 22 Mol Ethylenoxid (jeweils Emulgatortyp II) enthalten.

Bevorzugt von den Emulgatortypen II sind die Sulfonsäure-haltigen bzw. Sulfat-haltigen Verbindungen.

Die phosphorylierten und ethoxylierten styrylsubstituierten Phenole (Emulgatortyp I) können 10 bis 40 Mol Ethylenoxid enthalten. Diese Verbindungstypen sind beispielsweise in EP-A 163 598 beschrieben.

Die phosphorylierten Tenside können als Säuren eingesetzt werden, meist werden sie jedoch als Salze verwendet.

Unter den Salzen sind - dies gilt auch für die anderen Emulgatorsalze - insbesondere die Alkali- oder Erdalkalisalze sowie die Ammonium-, Mono-, Di- oder Trialkylammonium oder Mono-, Di- oder Trialkanolammoniumsalze hervorzuheben.

Als styrylhaltige, ethoxylierte und phosphorylierte Phenole kommen bevorzugt solche mit 1 bis 4 Styrylresten, insbesondere solche mit drei Styrylresten in Frage, die ca. 16 bis 29 Mol Ethylenoxid enthalten. Insbesondere können oxethylierte und phosphorylierte Tristyrylphenole, die mit Triethanolamin neutralisiert wurden, eingesetzt werden. ($^R$Soprophor FL, Firma Rhone Poulenc; HOE S 3475, Firma HOECHST AG).

Die obengenannten $(C_{13}-C_{18})$Alkansulfonsauren Salze des Emulgatortyps II enthalten bevorzugt sekundäre Alkylreste.

Die chlorierten Verbindungen enthalten insbesondere 1,2 bis 1,6 Mol Cl pro Mol Alkansulfonsäure. Bevorzugt hiervon sind die Na- und Ca-Salze.

Als Aminoxethylate können beispielsweise Cocosfettamin, Stearylamin, Oleylamin oder Talgfettamin eingesetzt werden, die 2 bis 25 Mol Ethylenoxid enthalten.

Neben den obengenannten Kombinationspartnern für die ethoxylierten und phosphorylierten Tristyrylphenole können auch folgende Hilfs-Emulgatoren zusätzlich eingesetzt werden:

Ethoxylierte Rizinusöle mit 36 bis 42 Mol EO; $(C_{16}-C_{20})$-Alkanole, die mit 1 bis 15 Mol Propylenoxid und anschließend mit 1 bis 30 Mol Ethylenoxid umgesetzt wurden; Polymerisationsprodukte aus Propylenoxid und Ethylenoxid mit einem Gehalt von 10 bis 80 Gew.-% Ethylenoxid und 90 bis 20 Gew.-% Propylenoxid; N-Butanol-Propylenoxid-Ethylenoxid-Block-oxalkylate; Xylenoloxethylate mit 3 bis 5 Mol Ethylenoxid, ethoxylierte $(C_8-C_{12})$-Alkylphenole oder propoxylierte und ethoxylierte Tributylphenole.

Die genannten ethoxylierten Alkylphenole enthalten vorzugsweise 8 bis 12 Mol Ethylenoxid. Unter propoxylierten und ethoxylierten Tributylphenolen sind insbesondere solche zu verstehen, die durch Umsetzung von Tributylphenolen mit 8 bis 12 Mol Propylenoxid und anschließend mit 1 bis 30 Mol Ethylenoxid erhalten werden.

Besonders bevorzugt als Kombinationspartner für den Emulgatortyp I sind die Alkylmono- bis -hexaglykolethersulfat-Natriumsalze zu nennen, wobei die Alkylreste zu 75 - 70 % aus $C_{12}$-Alkyl und zu 25 bis 30 % aus $C_{14}$-Alkyl bestehen (Handelsprodukt ®Genapol LRO, HOECHST AG).

Der mengenmäßige Anteil der Emulgatorkombination von phosphorylierten und nicht phosphorylierten Emulgatoren kann, bezogen auf die gesamte Formulierung 2,0 bis 40 Gew.-% betragen, insbesondere 8,0 bis 25 Gew.-%. An oxethyliertem und phosphoryliertem Polystyrylphenol (Typ I) kann 0,5 bis 35 Gew.-%, insbesondere jedoch 2,0 bis 18 Gew.-% enthalten sein. Nicht phosphorylierter Emulgator (Typ II) kann zu 0,1 bis 25 Gew.-%, insbesondere 0,5 bis 10 Gew.-% in den erfindungsgemäßen Formulierungen vorliegen. Der Wassergehalt variiert zwischen 10 und 60 Gew.-%.

Der Wirkstoffanteil bei den erfindungsgemäßen Mikroemulsionen beträgt zwischen 0,5 und 70 Gew.-%, insbesondere zwischen 10 und 50 Gew.-%.

Zusätzlich zu der erfindungsgemäß einzusetzenden Kombination von phosphorylierten und nicht phosphorylierten Tensiden können die Mikroemulsionen noch folgende Zusatzstoffe enthalten: Frostschutzmittel, wie z.B. ein- oder mehrwertige Alkohole, Glykolether oder Harnstoff, besonders Glycerin, Isopropanol, Propylenglykolmonomethylether, Di-oder Tripropylenglykolmonomethylether oder Cyclohexanol. Der Anteil dieser Frostschutzmittel liegt zwischen 0,5 und 30 Gew.-%.

Zur Stabilisierung bzw. der Erhaltung eines für die Zubereitung günstigen pH-Wertes werden in einigen Fällen Säuren, bevorzugt Carbonsäuren, wie z.B. Essigsäure oder Propionsäure in Anteilen von 0,5 bis 5,0 % zugesetzt.

Die Wirkstoffe werden vor Zugabe der Emulgatoren in geringen Mengen eines Lösungsmittels gelöst. Hierbei können verwendet werden: aromatische Lösungsmittel, wie z.B. alkylierte Benzole und Naphthaline, Ketone, wie z.B. Isophoron oder Cyclohexanon, Alkohole, wie z.B. Ethylenhexanol,Cyclohexanol oder Isononanol, Ester, wie z.B. n-Butylacetat, Butylglykolacetat oder Oxo-Alkyl-Acetate in denen Alkyl für $(C_6$-$C_{13})$Alkyl oder Tridecyl steht, sowie Phthalsäurealkylester. Die Formulierungen können je nach dem einzusetzenden Wirkstoff bis zu 40 Gew.-% Lösungsmittel enthalten.

Zur Herstellung der Mikroemulsionen wird der Wirkstoff in dem entsprechenden Lösungsmittel oder Lösungsmittelgemisch gelöst. Eine Lösung der Emulgatoren in Wasser wird unter intensiver Rührung zu dieser Lösung gegeben.

Ebenso ist es möglich die Emulgatoren zusammen mit dem Wirkstoff im Lösungsmittel zu lösen und das Wasser unter intensivem Rühren zuzugeben oder in umgekehrter Reihenfolge den Wirkstoff oder die Wirkstofflösung in die wäßrige Lösung der Emulgatoren einzurühren.

Als Wirkstoffe für die erfindungsgemäßen Mikroemulsionen lassen sich Insektizide, Nematizide, Fungizide, Herbizide sowie Kombinationen dieser Wirkstoffe untereinander einsetzen; besonders geeignet sind Triazophos, Deltamethrin, Binapacryl, Endosulfan, Abamectin, O-Ethyl-S-(N-Phenyl-N-methyl-carbamoylmethyl)-isopropylamidothiophosphat (HOE 36 275), Pyrazophos, Diclofopmethyl, Fenoxapropethyl. Diese Wirkstoffe sind mit Ausnahme von HOE 36 275 in CH.R. Worthing, S.B. Walker, The Pesticide Mannual, 7. Aufl. (1983), British Crop. Protection Counsil beschrieben. HOE 36 275 ist aus DE-PS 2 633 159 bekannt. Soweit die Verbindungen als Stereoisomeren auftreten können, sind die Isomerengemische oder die reinen Isomeren einsetzbar.

Vor der Anwendung der erfindungsgemäßen Mikroemulsionen werden diese in der gleichen Weise wie herkömmliche emulgierbare Konzentrate zur Herstellung einer Spritzbrühe mit Wasser verdünnt.

Die folgenden Beispiele dienen zur Erläuterung der Erfindung.

Beispiel 1

16,5 Gew.-% Tristyrylphenol, oxethyliert mit 20 Mol EO, phosphoryliert und neutralisiert mit Triethanolamin[1b] werden zusammen mit 2,5 Gew.-% Alkydiglykolethersulfat-Natriumsalz[2a] unter Rühren in 61,07 Gew.-% destilliertem Wasser gelöst. Zu dieser Lösung werden ebenfalls unter Rühren, 19,93 Gew.-% O-Ethyl-S-(N-phenyl-N-methylcarbamoylmethyl)-isopropylamidothiophosphat gegeben. Die Mischung wird etwa 12 Stunden bei 25°C gerührt, bis eine transparente, homogene Emulsion entstanden ist. Eine Probe wird 3 Monate bei 50°C gelagert. Die konzentrierte wäßrige Emulsion ist chemisch und anwendungstechnisch stabil.

Beispiel 2

15,5 Gew.-% Tristyrylphenol, oxethyliert mit 18 Mol EO, phosphoryliert und neutralisiert mit Triethanolamin[1a] werden mit 2,7 Gew.-% Alkyldiglykolethersulfat-Natriumsalz[2a], 4,5 Gew.-% eines Aminoxethylates aus Talgfettamin und 20 Mol Ethylenoxid und 6,3 Gew.-% Propylenglykolmonomethylether in 51,9 Gew.-% ®Hostathion (Konz.) gelöst. Unter intensivem Rühren werden dann 19,1 Gew.-% destilliertes Wasser zugesetzt. Man rührt solange nach, bis eine transparente, homogene Emulsion entstanden ist. Eine Probe

1a), 1b) Emulgatortyp    I (1a: ®Soprophor    FL, 1b: HOE 3475)

2a) Emulgatortyp    II (2a: ®Genapol    LRO)

wird 14 Tage bis 54°C und 3 Monate bei 40°C gelagert. Die Formulierung ist chemisch und anwendungstechnisch stabil.

Beispiel 3

2,54 Gew.-% Deltamethrin (96 %ig) werden in 23,5 Gew.-% Cyclohexanon gelöst. Hierzu gibt man unter intensivem Rühren eine Lösung von 2,90 Gew.-% Alkyldiglykolethersulfat, Natriumsalz[2a] 14,60 Gew.-% Tristyrylphenol, oxethyliert mit 20 Mol EO, phosphoryliert und neutralisiert mit Tiethanolamin[1b] sowie 0,98 Gew.-% Essigsäure in 55,48 Gew.-% destilliertem Wasser. Es wird gerührt, bis eine homogene Mikroemulsion entstanden ist. Eine Probe wird 3 Monate bei 50°C gelagert. Die Zubereitung ist chemisch und anwendungstechnisch stabil.

Beispiel 4

29,0 Gew.-% Binapacryl (97,8 %ig) werden in einem Gemisch von 25,0 Gew.-% Cyclohexanon und 10,0 Gew.-% Cyccolohexanol gelöst. Unter intensivem Rühren gibt man hierzu eine Lösung von 15,0 Gew.-% Tristyrylphenol, oxethyliert mit 20 Mol EO, phosphoryliert und neutralisiert mit Triethanolamin[1b] und 3,0 Gew.-% Alkyldiglykolethersulfat-Natriumsalz[2a] in 18,0 Gew.-% destilliertem Wasser. Man rührt bis eine homogene und transparente konzentrierte wäßrige Emulsion erhalten wird.
Die Formulierung ist nach 3monatiger Lagerung bei 50°C chemisch und anwendungstechniscch stabil.

Beispiel 5

5,4 Gew.-% Dodecyl-benzol Sulfonat-Calziumsalz (70 %ig) in Isobutanol und 4,1 Gew.-% Rizinusöl mit 36 Mol EO umgesetzt, sowie 6,7 Gew.-% Tristyrylphenol, oxethyliert mit 20 Mol EO, phosphoryliert und neutralisiert mit Triethanolamin[1b], werden in 20,8 Gew.-% Wasser gelöst und unter intensivem Rühren mit einer Lösung von 31,8 Gew.-% Endosulfan in einem Gemisch von 15,1 Gew.-% ®Solvesso 200 und 16,1 Gew.-% Cyclohexanon versetzt. Man rührt bis eine homogene Mikroemulsion entstanden ist. Die Zubereitung ist nach 14 Tagen Lagerung bei 54°C chemisch und anwendungstechnisch stabil.

Beispiel 6

21,1 Gew.-% Endosulfan (95,1 %ig) und 10,3 Gew.-% Binapacryl (97,8 %ig) werden in einem Gemisch von 20,0 Gew.-% Cyclohexanon und 10,0 Gew.-% Cyclohexanol gelöst. Hierzu gibt man unter intensivem Rühren eine Lösung von 15,0 Gew.-% Tristyrylphenol, oxethyliert mit 20 Mol EO, phosphoryliert und neutralisiert mit Triethanolamin[1b] und 3,0 Gew.-% Alkyldiglykolethersulfat-Natriumsalz[2a] in 20,6 Gew.-% destilliertem Wasser.
Es entsteht eine homogene, transparente Emulsion. Eine Probe wird 3 Monate bei 50°C gelagert. Die Formulierung ist chemisch und anwendungstechnisch stabil.

Beispiel 7

45,5 Gew.-% einer 60 %igen Lösung von Pyrazophos in ®Solvesso 200 werden mit 22,7 Gew.-% Cyclohexanol gemischt. Zu dieser Mischung wird unter intensivem Rühren eine Lösung von 10,9 Gew.-% Tristyrylphenol, oxethyliert mit 20 Mol EO, phosphoryliert und neutralisiert mit Triethanolamin[1b] und 2,7 Gew.-% Alkyldiglykolethersulfat-Natriumsalz[2a] in 18,2 Gew.-% Wasser gegeben. Man rührt bis eine homogene, transparente Emulsion entstanden ist. Nach 3monatiger Lagerung bei 50°C ist die Formulierung chemisch und anwendungstechnisch stabil.

Beispiel 8

45,5 Gew.-% einer 60 %igen Lösung von Pyrazophos in Solvesso 200 werden mit 8,2 Gew.-% Cyclohexanol gemischt. Zu dieser Mischung wird unter intensivem Tühren eine Lösung von 5,4 Gew.-% Tristyrylphenol, oxethyliert mit 20 Mol EO, phosphoryliert und neutralisiert mit Triethanolamin[1b], 0,2 Gew.-% Alkyldiglykolethersulfat-Natriumsalz[2a] und 22,5 Gew.-% Nonylphenol ethoxyliert mit 10 EO, in 18,2 Gew.-% Wasser gegeben. Es entsteht eine homogene Mikroemulsion, die nach 14tägiger Lagerung chemisch und anwendungstechnisch stabil ist.

Beispiel 9

45,5 Gew.-% einer 60 %igen Lösung von Pyrazophos in ®Solvesso 200 werden mit 8,2 Gew.-% Cyclohexanol gemischt. Zu dieser Mischung wird unter intensivem Rühren eine Lösung von 5,4 Gew.-% Tristyrylphenol, oxethyliert mit 20 Mol EO, phosphoryliert und neutralisiert mit Triethanolamin[1b] 0,2 Gew.-% Alkyldiglykolethersulfat-Natruimsalz[2a] und 22,5 Gew.-% Tributylphenol, ethox-

1b) Emulgatortyp    I (1b: HOE  3475)

2a) Emulgatortyp    II (2a: ®Genapol  LRO)

yliert mit 11 Mol EO, in 18,2 Gew.-% Wasser gegeben. Es entsteht eine homogene transparente Emulsion, die nach 14tägiger Lagerung bei 54°C chemisch und anwendungstechnisch stabil ist.

Beispiel 10

45,5 Gew.-% einer 60 %igen Lösung von Pyrazophos in ®Solvesso 200 werden mit 5,4 Gew.-% Cyclohexanol gemischt. Zu dieser Mischung wird unter intensivem Rühren eine Lösung von 8,2 Gew.-% Tristyrylphenol, oxethyliert mit 20 Mol EO, phosphoryliert und neutralisiert mit Triethanolamin[1b] und 22,7 Gew.-% α-Alkyl-omega-hydroxypolyoxyethylen[2b] mit 8 EO-Einheiten, wobei Alkyl für $C_{13}$ steht, in 18,2 Gew.-% Wasser gegeben. Man rührt, bis eine homogene Mikroemulsion entstanden ist. Eine Probe wird 14 Tage bei 54°C gelagert. Die Formulierung ist chemisch und anwendungstechnisch stabil.

Beispiel 11

2,0 Gew.-% Abamectin werden in 22,0 Gew.-% Cyclohexanon gelöst und unter intensivem Rühren mit einer Lösung von 15,0 Gew.-% Tristyrylphenol, oxethyliert mit 20 Mol EO, phosphoryliert und neutralisiert mit Triethanolamin[1b] und 3,0 Gew.-% Alkyldiglykolethersulfat-Natriumsalz[2a] in 58,0 Gew.-% destilliertem Wasser versetzt. Man erhält eine homogene, transparente Emulsion, die nach 14tägiger Lagerung bei 54°C anwendungstechnisch und chemisch stabil ist.

Beispiel 12

24,0 Gew.-% Diclofop-methyl werden in 19,0 Gew.-% Cyclohexanon gelöst und unter kräftigem Rühren zu einer Lösung von 3,0 Gew.-% Alkyldiglykolethersulfat-Natriumsalz[2a], 17,0 Gew.-% Tristyrylphenol, oxethyliert mit 20 Mol EO, phosphoryliert und neutralisiert mit Triethanolamin[1b] und 17,0 Gew.-% Propylenglykol-monomethylether in 20,0 Gew.-% Wasser gegeben. Man rührt bis eine transparente, homogene Emulsion entstanden ist. Die Formulierung ist bei 54°C und bei 0°C anwendungstechnisch und chemisch stabil.

Beispiel 13

8,0 Gew.-% Fenoxaprop-ethyl werden in 10,0 Gew.-% Solvesso 200, 15,0 Gew.-% Cyclohexanon und 4,0 Gew.-% Phthalsäurediethylester gelöst und unter intensivem Rühren zu einer Lösung von 18,0 Gew.-% Tristyrylphenol, oxethyliert mit 20 Mol EO, phosphoryliert und neutralisiert mit Triethanolamin[1b], 3,0 Gew.-% Alkyldiglykolethersulfat-Natriumsalz[2a] und 22,0 Gew.-% Propylenglykol-monomethylether in 20,0 Gew.-% Wasser gegeben. Die Mischung wird gerührt bis eine transparente Emulsion entstanden ist. Die Formulierung ist bei 54°C und bei 0°C anwendungstechnisch und chemisch stabil.

Beispiel 14

16,5 Gew.-% Tristyrylphenol, oxethyliert mit 20 Mol EO, phosphoryliert und neutralisiert mit Kaliumhydroxid werden zusammen mit 2,5 Gew.-% Alkydiglykolethersulfat-Natriumsalz[2a] unter Rühren in 61,07 Gew.-% destilliertem Wasser gelöst. Zu dieser Lösung werden ebenfalls unter Rühren, 19,93 Gew.-% O-Ethyl-S(N-phenyl-N-methyl-carbamoylmethyl)-isopropylamidothiophosphat gegeben. Die Mischung wird etwa 12 Stunden bei 25°C gerührt, bis eine transparente, homogene Emulsion entstanden ist. Eine Probe wird 3 Monate bei 50°C gelagert. Die konzentrierte wäßrige Emulsion ist chemisch und anwendungstechnisch stabil.

Beispiel 15

15,5 Gew.-% Tristyrylphenol, oxethyliert mit 18 Mol EO, phosphoryliert und neutralisiert mit Kaliumhydroxid werden mit 2,7 Gew.-% Alkyldiglykolethersulfat-Natriumsalz[2a], 4,5 Gew.-% eines Aminoxethylates aus Talgfettamin und 20 Mol Ethylenoxid und 6,3 Gew.-% Propylenglykol-monomethylether in 51,9 Gew.-% ®Hostathion (Konz.) gelöst. Unter intensivem Rühren werden dann 19,1 Gew.-% destilliertes Wasser zugesetzt. Man rührt solange nach, bis eine transparente, homogene Emulsion entstanden ist. Eine Probe wird 14 Tage bei 54°C und 3 Monate bei 40°C gelagert. Die Formulierung ist chemisch und anwendungstechnisch stabil.

Beispiel 16

2,54 Gew.-% Deltamethrin (96 %ig) werden in 23,5 Gew.-% Cyclohexanon gelöst. Hierzu gibt man unter intensivem Rühren eine Lösung von 2,90 Gew.-% Alkyldiglykolethersulfat, Natriumsalz[2a] 14,60 Gew.-% Tristyrylphenol, oxethyliert mit 20 Mol EO, phosphoryliert und neutralisiert mit

1b) Emulgatortyp I (1b: HOE 3475)

2a), 2b) Emulgatortyp II (2a: ®Genapol LRO; 2b: ®Genapol-X-080, jeweils HOECHST AG)

Kaliumhydroxid sowie 0,98 Gew.-% Essigsäure in 55,48 Gew.-% destilliertem Wasser. Es wird gerührt, bis eine homogene Mikroemulsion entstanden ist. Eine Probe wird 3 Monate bei 50°C gelagert. Die Zubereitung ist chemisch und anwendungstechnisch stabil.

Beispiel 17

29,0 Gew.-% Binapacryl (97,8 %ig) werden in einem Gemisch von 25,0 Gew.-% Cyclohexanon und 10,0 Gew.-% Cyclohexanol gelöst. Unter intensivem Rühren gibt man hierzu eine Lösung von 15,0 Gew.-% Tristyrylphenol, oxethyliert mit 20 Mol EO, phosphoryliert und neutralisiert mit Natriumhydroxid und 3,0 Gew.-% Alkyldiglykolethersulfat-Natriumsalz[2a)] in 18,0 Gew.-% destilliertem Wasser. Man rührt bis eine homogene und transparente konzentrierte wäßrige Emulsion erhalten wird.
Die Formulierung ist nach 3monatiger Lagerung bei 50°C chemisch und anwendungstechnisch stabil.

Beispiel 18

5,4 Gew.-% Dodecyl-benzol Sulfonat-Calziumsalz (70 %ig) in Isobutanol und 4,1 Gew.-% Rizinusöl mit 36 Mol EO umgesetzt, sowie 6,7 Gew.-% Tristyrylphenol, oxethyliert mit 20 Mol EO, phosphoryliert und neutralisiert mit Kaliumhydroxid, werden in 20,8 Gew.-% Wasser gelöst und unter intensivem Rühren mit einer Lösung von 31,8 Gew.-% Endosulfan in einem Gemisch von 15,1 Gew.-% ®Solvesso 200 und 16,1 Gew.-% Cyclohexanon versetzt. Man rührt bis eine homogene Mikroemulsion entstanden ist. Die Zubereitung ist nach 14 Tagen Lagerung bei 54°C chemisch und anwendungstechnisch stabil.

Beispiel 19

21,1 Gew.-% Endosulfan (95,1 %ig) und 10,3 Gew.-% Binapacryl (97,8 %ig) werden in einem Gemisch von 20,0 Gew.-% Cyclohexanon und 10,0 Gew.-% Cyclohexanol gelöst. Hierzu gibt man unter intensivem Rühren eine Lösung von 15,0 Gew.-% Tristyrylphenol, oxethyliert mit 20 Mol EO, phosphoryliert und neutralisiert mit Natriumhydroxid und 3,0 Gew.-% Alkyldiglykolethersulfat-Natriumsalz[2a)] in 20,6 Gew.-% destilliertem Wasser.
Es entsteht eine homogene, transparente Emulsion. Eine Probe wird 3 Monate bei 50°C gelagert. Die Formulierung ist chemisch und anwendungstechnisch stabil.

Beispiel 20

45,5 Gew.-% einer 60 %igen Lösung von Pyrazophos in ®Solvesso 200 werden mit 22,7 Gew.-% Cyclohexanol gemischt. Zu dieser Mischung wird unter intensivem Rühren eine Lösung von 10,9 Gew.-% Tristyrylphenol, oxethyliert mit 20 Mol EO, phosphoryliert und neutralisiert mit Kaliumhydroxid und 2,7 Gew.-% Alkyldiglykolethersulfat-Natriumsalz[2a)] in 18,2 Gew.-% Wasser gegeben. Man rührt bis eine homogene, transparente Emulsion entstanden ist. Nach 3monatiger Lagerung bei 50°C ist die Formulierung chemisch und anwendungstechnisch stabil.

Beispiel 21

45,5 Gew.-% einer 60 %igen Lösung von Pyrazophos in Solvesso 200 werden mit 8,2 Gew.-% Cyclohexanol gemischt. Zu dieser Mischung wird unter intensivem Rühren eine Lösung von 5,4 Gew.-% Tristyrylphenol, oxethyliert mit 20 Mol EO, phosphoryliert und neutralisiert mit Natriumhydroxid, 0,2 Gew.-% Alkyldiglykolethersulfat-Natriumsalz[2a)] und 22,5 Gew.-% Nonylphenol ethoxyliert mit 10 EO, in 18,2 Gew.-% Wasser gegeben. Es entsteht eine homogene Mikroemulsion, die nach 14tägiger Lagerung chemisch und anwendungstechnisch stabil ist.

Beispiel 22

45,5 Gew.-% einer 60 %igen Lösung von Pyrazophos in ®Solvesso 200 werden mit 8,2 Gew.-% Cyclohexanol gemischt. Zu dieser Mischung wird unter intensivem Rühren eine Lösung von 5,4 Gew.-% Tristyrylphenol, oxethyliert mit 20 Mol EO, phosphoryliert und neutralisiert mit Kaliumhydroxid 0,2 Gew.-% Alkyldiglykolethersulfat-Natriumsalz[2a)] und 22,5 Gew.-% Tributylphenol, ethoxyliert mit 11 Mol EO, in 18,2 Gew.-% Wasser gegeben. Es entsteht eine homogene transparente Emulsion, die nach 14tägiger Lagerung bei 54°C chemisch und anwendungstechnisch stabil ist.

Beispiel 23

45,5 Gew.-% einer 60 %igen Lösung von Pyrazophos in ®Solvesso 200 werden mit 5,4 Gew.-% Cyclohexanol gemischt. Zu dieser Mischung wird unter intensivem Rühren eine Lösung von 8,2 Gew.-% Tristyrylphenol, oxethyliert mit 20 Mol EO, phosphoryliert und neutralisiert mit Kaliumhydroxid und 22,7 Gew.-% α-Alkyl-omega-hydroxypolyoxy-

2a) Emulgatortyp    II (2a: ®Genapol    LRO)

ethylen[2b)] mit 8 EO-Einheiten, wobei Alkyl für $C_{13}$ steht, in 18,2 Gew.-% Wasser gegeben. Man rührt, bis eine homogene Mikroemulsion entstanden ist. Eine Probe wird 14 Tage bei 54°C gelagert. Die Formulierung ist chemisch und anwendungstechnisch stabil.

Beispiel 24

2,0 Gew.-% Abamectin werden in 22,0 Gew.-% Cyclohexanon gelöst und unter intensivem Rühren mit einer Lösung von 15,0 Gew.-% Tristyrylphenol, oxethyliert mit 20 Mol EO, phosphoryliert und neutralisiert mit Kaliumhydroxid und 3,0 Gew.-% Alkyldiglykolethersulfat-Natriumsalz[2a)] in 58,0 Gew.-% destilliertem Wasser versetzt. Man erhält eine homogene, transparente Emulsion, die nach 14tägiger Lagerung bei 54°C anwendungstechnisch und chemisch stabil ist.

Beispiel 25

24,0 Gew.-% Diclofop-methyl werden in 19,0 Gew.-% Cyclohexanon gelöst und unter kräftigem Rühren zu einer Lösung von 3,0 Gew.-% Alkyldiglykolethersulfat-Natriumsalz[2a)], 17,0 Gew.-% Tristyrylphenol, oxethyliert mit 20 Mol EO, phosphoryliert und neutralisiert mit Kaliumhydroxid und 17,0 Gew.-% Propylenglykol-monomethylether in 20,0 Gew.-% Wasser gegeben. Man rührt bis eine transparente, homogene Emulsion entstanden ist. Die Formulierung ist bei 54°C und bei 0°C anwendungstechnisch und chemisch stabil.

Beispiel 26

8,0 Gew.-% Fenoxaprop-ethyl werden in 10,0 Gew.-% Solvesso 200, 15,0 Gew.-% Cyclohexanon und 4,0 Gew.-% Phthalsäurediethylester gelöst und unter intensivem Rühren zu einer Lösung von 18,0 Gew.-% Tristyrylphenol, oxethyliert mit 20 Mol EO, phosphoryliert und neutralisiert mit Natriumhydroxid, 3,0 Gew.-% Alkyldiglykolethersulfat-Natriumsalz[2a)] und 22,0 Gew.-% Propylenglykol-monomethylether in 20,0 Gew.-% Wasser gegeben. Die Mischung wird gerührt bis eine transparente Emulsion entstanden ist. Die Formulierung ist bei 54°C und bei 0°C anwendungstechnisch und chemisch stabil.

**Patentansprüche**

1. Pflanzenschutzmittel auf der Basis von wäßrigen Mikroemulsionen, dadurch gekennzeichnet, daß sie als Emulgatoren ethoxylierte und phosphorylierte styrylsubstituiertes Phenole, oder deren Salze in Kombination mit einem oder mehreren nichtphosphorylierten Emulgatoren aus der Gruppe der $(C_{10}-C_{16})$Alkylmonobis -hexaglykolethersulfatsalze, der $\alpha$-$(C_{14}-C_{19})$Alkenolsulfat-Salze, der gegebenenfalls chlorierten $(C_{13}-C_{18})$alkansulfonsauren Salze, der dodecylphenylsulfonsauren Salze, der Aminoxethylate oder der $\alpha$-$(C_9-C_{20})$Alkyl-$\omega$-hydroxypolyoxethylene mit 2 bis 22 Mol Ethylenoxid enthalten.

2. Pflanzenschutzmittel gemäß Anspruch 1, dadurch gekennzeichnet, daß das ethoxylierte und phosphorylierte styrylsubstituierte Phenol 1 bis 4 Styrylreste und 10 bis 40 Mol Ethylenoxid enthält.

3. Pflanzenschutzmittel gemäß Ansprüchen 1 oder 2, dadurch gekennzeichnet, daß als nichtphosphorylierte Emulgator-Typen $(C_{10}-C_{16})$-Alkylmono- bis -hexaglykolethersulfat-Salze eingesetzt werden.

4. Pflanzenschutzmittel gemäß einem oder mehreren der Ansprüche 1 bis 3, dadurch gekennzeichnet, daß als Wirkstoffe die Verbindungen Triazophos, Deltamethrin, Binapacryl, Endosulfan, Abamectin, O-Ethyl-S-(N-Phenyl-N-methyl-carbamoylmethyl)-isoproppylamidothiophosphat (HOE 36 275), Pyrazophos, Diclofopmethyl oder Fenoxapropethyl eingesetzt werden.

5. Pflanzenschutzmittel gemäß einem oder mehreren der Ansprüche 1 bis 4, dadurch gekennzeichnet, daß sie 2 bis 40 Gew.-% Emulgatoren, 10 - 60 Gew.-% Wasser und 0,5 bis 70 Gew.-% Wirkstoff enthalten.

**Claims**

1. A plant protection agent based on an aqueous microemulsion which contains, as emulsifiers, ethoxylated and phosphorylated, styryl-substituted phenols or salts thereof in combination with one or more non-phosphorylated emulsifiers belonging to the group comprising salts of $(C_{10}-C_{16})$-alkyl-monoglycol to -hexaglycol ether-sulfates, salts of $\alpha$-$(C_{14}-C_{19})$-alkenol sulfate, salts of optionally chlorinated $(C_{13}-C_{18})$-alkanesulfonic acids, salts of dodecylphenylsulfonic acid, amine oxethylates or $\alpha$-$(C_9-C_{20})$-alkyl-$\omega$-hydroxypolyoxethylenes containing 2 to 22 moles of ethylene oxide.

2. A plant protection agent as claimed in claim 1,

2a), 2b) Emulgatortyp    II (2a: ®Genapol    LRO;    2b: ®Genapol-X-080,      jeweils HOECHST    AG)

wherein the ethoxylated and phosphorylated, styryl-substituted phenol contains 1 to 4 styryl radicals and 10 to 40 moles of ethylene oxide.

3.  A plant protection agent as claimed in claims 1 or 2, wherein salts of $(C_{10}-C_{16})$-alkyl-monoglycol to -hexaglycol ether-sulfates are employed as the non-phosphorylated types of emulsifier.

4.  A plant protection agent as claimed in one or more of claims 1 to 3, wherein the active compounds employed are the compounds triazophos, deltamethrin, binapacryl, endosulfan, abamectin, O-ethyl S-(N-phenyl-N-methyl-carbamoylmethyl) isopropylamidothiophosphate (HOE 36,275), pyrazophos, diclofopmethyl or fenoxapropethyl.

5.  A plant protection agent as claimed in one or more of claims 1 to 4, which contains 2 to 40 % by weight of emulsifiers, 10 - 60 % by weight of water and 0.5 to 70 % by weight of active compound.

## Revendications

1.  Produits phytosanitaires à base de microémulsions aqueuses, caractérisés en ce qu'ils contiennent comme émulsionnants des styrylphénols éthoxylés et phosphorylés ou des sels de ceux-ci avec un ou plusieurs émulsionnants non phosphorylés du groupe des sels d'esters sulfuriques d'éthers $(C_{10}-C_{16})$alkylmono- à -hexaglycoliques, des sels d'esters sulfuriques d'$\alpha$-$(C_{14}-C_{19})$alcénols, des sels d'acides $(C_{13}-C_{18})$-alcane-sulfoniques éventuellement chlorés, des sels d'acides dodécylphénylsulfoniques, des produits d'oxéthylation d'amines ou des $\alpha$-$(C_9-C_{20})$alkyl-$\omega$-hydroxypolyoxéthylènes avec de 2 à 22 moles d'oxyde d'éthylène.

2.  Produits phytosanitaires selon la revendication 1 caractérisés en ce que le styryl-phénol éthoxylé et phosphorylé a de 1 à 4 radicaux styryle et de 10 à 40 moles d'oxyde d'éthylène.

3.  Produits phytosanitaires selon la revendication 1 ou 2 caractérisés en ce que les émulsionnants non-phosphorylés sont des sels d'esters sulfuriques d'éthers $(C_{10}-C_{16})$ alkylmono- à -hexaglycoliques.

4.  Produits phytosanitaires selon une ou plusieurs des revendications 1 à 3 caractérisés en ce qu'ils contiennent comme matières actives les composés Triazophos, Deltamethrin, Binapacryl, Endosulfan, Abamectin, O-éthyl-S-(N-Phenyl-N-methyl-carbomoylmethyl)-isoproppylamidothiophosphate (HOE 36 275), Pyrazophos, Diclofopmethyl ou Fenoxapropethyl.

5.  Produits phytosanitaires selon une ou plusieurs des revendications 1 à 4, caractérisés en ce qu'ils contiennent de 2 à 40 % en poids d'émulsionnants, de 10 à 60 % d'eau et de 0,5 à 70 % de la matière active.